# EUROPÄISCHE PATENTSCHRIFT

(11) **EP 1 293 400 B1**
(45) Veröffentlichungstag und Bekanntmachung des Hinweises auf die Patenterteilung: **30.04.2008**
(21) Anmeldenummer: 02019654.9
(22) Anmeldetag: 03.09.2002
(51) Int. Cl.: B60R 21/34

(54) **Anordnung einer Frontklappe für den Schutz von Fussgängern**
Arrangement of a front bonnet for pedestrian protection
Arrangement d'un capot pour la protection des piétons

(30) Priorität: 12.09.2001 DE 10144811
(43) Veröffentlichungstag der Anmeldung: 19.03.2003
(73) Patentinhaber: Bayerische Motoren Werke Aktiengesellschaft, 80809 München (DE)
(72) Erfinder: Koestler, Ulrich, 85241 Hebertshausen (DE); Hiergeist, Christian, 94333 Geiselhöring (DE); Korkusuz, Haci, 81671 München (DE)

(56) Entgegenhaltungen:
- EP-A- 1 104 727
- WO-A-00/69705
- DE-A- 10 035 105
- DE-A- 19 712 961
- PATENT ABSTRACTS OF JAPAN vol. 2000, no. 02, 29. Februar 2000 (2000-02-29) -& JP 11 310158 A (HONDA MOTOR CO LTD), 9. November 1999 (1999-11-09)

## Beschreibung

Die Erfindung betrifft eine Anordnung einer Frontklappe an einem Fahrzeug, mit einer - in Fahrtrichtung betrachtet - hinten liegenden Scharniereinrichtung, um die die Frontklappe zum normalen Öffnen verschwenkbar ist, gemäß des Oberbegriffs des Patentanspruchs 1.

Aus der gattungsbildenden DE 197 12 961 A1 ist eine Anordnung einer Frontklappe an einem Fahrzeug bekannt, die zum normalen Öffnen über eine - in Fahrtrichtung betrachtet - hinten liegende Scharniereinrichtung verschwenkbar ist. Im Fall einer Kollision mit einem Fußgänger ist die Scharniereinrichtung verlagerbar und hebt hierbei die Frontklappe in ihrem hinteren Bereich an. Dazu weist die Scharniereinrichtung einen Scharnierträger auf, der über ein Gelenk schwenkbar an der Karosserie des Fahrzeugs angeordnet ist.

Der Erfindung liegt die Aufgabe zugrunde, die bekannte Anordnung einer Frontklappe mit einer hinten liegenden Scharniereinrichtung weiterzubilden.

Diese Aufgabe wird durch die Merkmale des Patentanspruchs 1 gelöst.

Erfindungsgemäß weist die Scharniereinrichtung ein Viergelenk mit einem kurzen und einem langen Lenker auf. Kerngedanke der Erfindung ist es, dass zwischen der Karosserie und dem karosserieseitigen Gelenk des kurzen Lenkers ein Koppellenker angelenkt ist, und zwischen der Karosserie und dem karosserieseitigen Gelenk des langen Lenkers ein Steuerlenker angelenkt ist, an dem die energiespeichernde Einrichtung angreift.

Idealerweise erstreckt sich der Steuerlenker über das karosserieseitige Gelenk des langen Lenkers hinaus, wobei die energiespeichernde Einrichtung an diesem freien Endbereich des Steuerlenkers angelenkt ist. Dadurch entsteht ein Hebel, wobei am langen Hebelarm die energiespeichernde Einrichtung und am kurzen Hebelarm der lange Lenker angreift. Damit muss die energiespeichernde Einrichtung zwar zum Verlagern des langen Lenkers einen größeren Weg zurücklegen, dafür sind geringere Kräfte ausreichend.

Vorteilhafterweise erstreckt sich der Steuerlenker zusätzlich auch über das Gelenk an der Karosserie hinaus, wobei an diesem freien Endbereich des Steuerlenkers eine Haltevorrichtung vorgesehen ist, die beim normalen Öffnen und Schließen der Frontklappe am karosserieseitigen Gelenk des kurzen Lenkers festgelegt ist. Da die energiespeichernde Einrichtung in ihrer nicht ausgelösten Stellung eine feste Länge bzw. eine Verriegelung der Stellung aufweist, kann sich aufgrund der Koppelung des Steuerlenkers mit dem karosserieseitigen Gelenk des kurzen Lenkers nur der kurze und der lange Lenker bewegen. Damit liegt von der Kinematik her ein klassisches Viergelenkscharnier vor, wenn die energiespeichernde Einrichtung nicht ausgelöst ist. Die Frontklappe lässt sich so komfortabel öffnen und schließen. Eine Hinterkante der Frontklappe, die sich in der geschlossenen Stellung der Frontklappe etwas hinter dem Scharniermechanismus befindet, taucht beim Öffnen der Frontklappe aufgrund des Viergelenkmechanismus nicht unerwünschterweise in den darunter liegenden Bereich ein.

Wenn die energiespeichernde Einrichtung ausgelöst wird, verschwenkt der Steuerlenker um seine Anlenkung an der Karosserie und löst dabei die Festlegung mit dem karosserieseitigen Gelenk des kurzen Lenkers. Gleichzeitig wird durch die Verschwenkung des Steuerlenkers das karosserieseitige Gelenk des langen Lenkers nach oben verlagert. Der kurze Lenker kann sich quasi um den Koppellenker verlängern. Damit die Frontklappe dabei im hinteren Bereich definiert angehoben wird, ist eine Fixierung der Frontklappe im vorderen Bereich beispielsweise durch ein Klappenschloss noch zusätzlich erforderlich. Durch das Anheben der Frontklappe entsteht zwischen der festen Karosserie und der beweglichen Klappe ein Abstand. Es steht dadurch genügend Raum unter der Frontklappe zur Verfügung, um die Deformationsenergie in der Frontklappe bei einem Aufprall eines Fußgängers aufzunehmen.

Die karosserieseitigen Anlenkpunkte befinden sich günstigerweise auf einem Grundträger, der an der Karosserie angebracht ist. Dadurch kann der komplette Scharniermechanismus als vormontiertes Modul an der Karosserie angebracht werden. Die Montagezeit direkt an der Karosserie verkürzt sich so. Toleranzen der Karosserie und / oder der Frontklappe lassen sich durch den Grundträger gut ausgleichen, der zur Befestigung an der eigentlichen Karosserie beispielsweise ein Langloch aufweist.

Weitere vorteilhafte Ausgestaltungen sind Gegenstand von Unteransprüchen.

In der Zeichnung ist ein Ausführungsbeispiel der Erfindung dargestellt, das im folgenden näher beschrieben wird. Es zeigen in schematischer Darstellungsweise:
- **Fig.** 1: eine Seitenansicht einer erfindungsgemäßen Anordnung einer Frontklappe mit einem Scharniermechanismus in der geschlossenen Stellung und
- **Fig.** 2: eine Seitenansicht der Anordnung einer Frontklappe von **Fig**. 1 in der Stellung mit aktiviertem Fußgängeraufprallschutz.

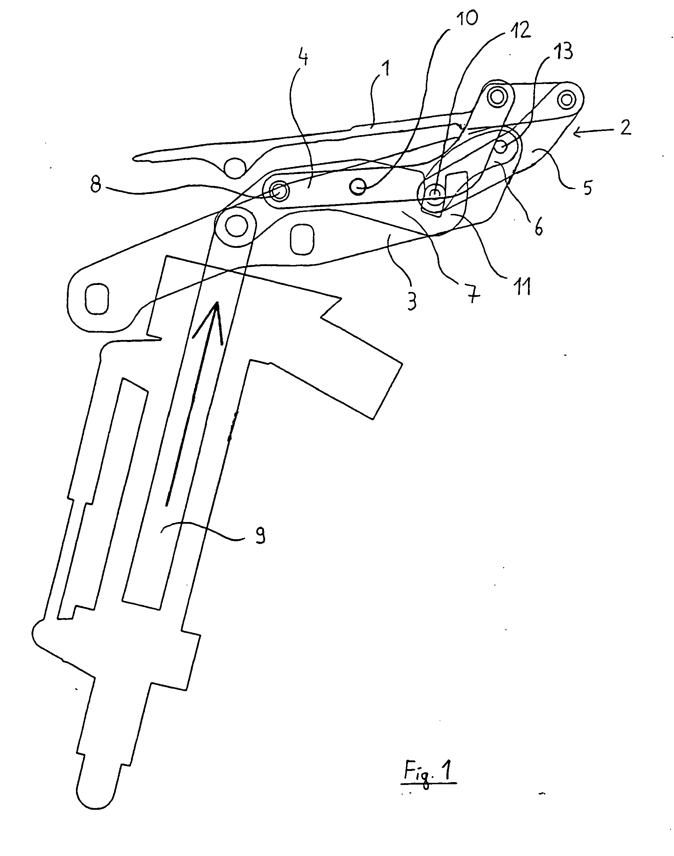

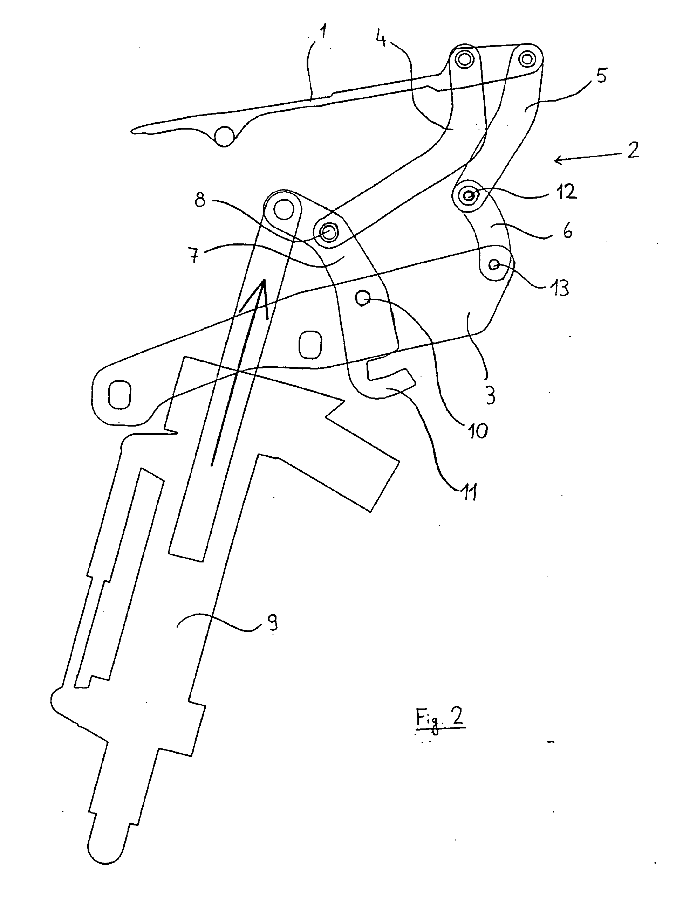

In den beiden Figuren **Fig.** 1 und **Fig.** 2 ist jeweils die Anbindung einer Frontklappe 1 gezeigt, die über einen - in Fahrtrichtung betrachtet - hinten liegenden Scharniermechanismus 2 an einem karosseriefesten Grundträger 3 angelenkt ist. Im hinteren Bereich der Frontklappe 1 ist ein vorderer langer Lenker 4 und ein hinterer kurzer Lenker 5 angelenkt. Am karosserieseitigen Endabschnitt des kurzen Lenkers 5 ist ein Koppellenker 6 angelenkt, der wiederum mit dem hinteren Ende des Grundträgers 3 mit einem Gelenk 13 verbunden ist. Am karosserieseitigen Endabschnitt des langen Lenkers 4 ist ein Steuerlenker 7 angelenkt, der außerdem im mittleren Bereich des Grundträgers 3 mit diesem gelenkig verbunden ist. Der Steuerlenker 7 ragt über das Gelenk 8 mit dem langen Lenker 4 hinaus. An diesem freien Endabschnitt des Steuerlenkers 7 greift eine energiespeichernde Einrichtung 9 von unten gelenkig an. Auch über das Gelenk 10 mit dem Grundträger 3 ragt der Steuerlenker 7 hinaus. An diesem zweiten freien Endabschnitt ist der Steuerlenker 7 als Haken 11 ausgebildet.

In der in **Fig.** 1 gezeigten geschlossenen Stellung der Frontklappe 1 mit nicht aktiviertem Fußgängeraufprallschutz weist die energiespeichernde Einrichtung 9 eine feste Länge auf. Dadurch kann sich auch der Steuerlenker 7 nicht um das Gelenk 10 mit dem Grundträger 3 drehen. Der Steuerlenker 7 ist in dieser Stellung also fixiert. Der Haken 11 des Steuerlenkers 7 umgreift dabei das Gelenk 12 zwischen Koppellenker 6 und kurzem Lenker 5. Damit kann der Koppellenker 6 sich nicht um sein Gelenk 13 am Grundträger 3 drehen. Die zwei Gelenke 10 und 12 und das Gelenk 13 zwischen Koppellenker 6 und Grundträger 3 liegen dabei alle in etwa auf einer Geraden. Die einzigen beiden Lenker, die sich in dieser Stellung der energiespeichernden Einrichtung 9 drehen können, sind der kurze und der lange Lenker 5 und 4. Damit ist die Funktionalität des Scharniermechanismus 2 so auf die eines gewöhnlichen Viergelenkscharniers reduziert. Die Frontklappe 1 kann problemlos konventionell geöffnet und geschlossen werden.

Wenn ein Aufprall eines Fußgängers detektiert wird, wird die energiespeichernde Einrichtung 9 ausgelöst. Diese verlängert sich dann schlagartig teleskopisch, wie es in **Fig.** 2 gezeigt ist. Dazu kann die energiespeichernde Einrichtung 9 beispielsweise eine vorgespannte Druckfeder oder eine Gasdruckfeder enthalten, in deren einer Luftkammer wie bei einem Airbag eine kleine pyrotechnische Patrone zum Auslösen gezündet wird. Durch die Verlängerung der energiespeichernden Einrichtung 9 wird der Steuerlenker 7 um sein Gelenk 10 mit dem Grundträger 3 gedreht. Der Haken 11 umgreift dadurch nicht mehr das Gelenk 12 zwischen Koppellenker 6 und kurzem Lenker 5. Das karosserieseitige Gelenk 8 des langen Lenkers 4 verlagert sich nach oben. Wenn die Fronthaube 1 an ihrem vorderen Endabschnitt noch gehalten wird, ist eine genaue Kinematik der Fronthaube 1 vorgegeben. Der Koppellenker 6 dreht sich dann um sein Gelenk 13 am Grundträger 3 und verlängert so den kurzen Lenker 5. Der hintere Bereich der Frontklappe 1 wird so angehoben.

Der so entstandene Abstand zwischen der Frontklappe 1 und sich darunter befindenden Gegenständen und / oder Aggregaten reicht aus, um bei einem Aufprall eines Fußgängers beispielsweise den Kopf des Fußgängers weich genug abzufangen, dass das Risiko größerer Verletzungen gering ist.

## Patentansprüche

1. Anordnung einer Frontklappe an einem Fahrzeug, mit zumindest einer - in Fahrtrichtung betrachtet - hinten liegenden Scharniereinrichtung, um die die Frontklappe zum normalen Öffnen und Schließen verschwenkbar ist, und die bei einer Kollision des Fahrzeugs mit einem Fußgänger die Frontklappe im hinteren Bereich mittels einer energiespeichernden Einrichtung anhebt, wobei die Scharniereinrichtung ein Viergelenk mit einem kurzen und einem langen Lenker aufweist, **dadurch gekennzeichnet, dass** zwischen der Karosserie und dem karosserieseitigen Gelenk (**12**) des kurzen Lenkers (**5**) ein Koppellenker (**6**) angelenkt ist, und zwischen der Karosserie und dem karosserieseitigen Gelenk (**8**) des langen Lenkers (**4**) ein Steuerlenker (**7**) angelenkt ist, an dem die energiespeichernde Einrichtung (**9**) angreift.

2. Anordnung nach Anspruch 1, **dadurch gekennzeichnet, dass** sich der Steuerlenker (**7**) über das karosserieseitige Gelenk (**8**) des langen Lenkers (**4**) hinaus erstreckt, wobei die energiespeichernde Einrichtung (**9**) an diesem freien Endbereich des Steuerlenkers (**7**) angelenkt ist.

3. Anordnung nach Anspruch 1 oder 2, **dadurch gekennzeichnet, dass** sich der Steuerlenker (**7**) über das Gelenk (**10**) an der Karosserie hinaus erstreckt, und an diesem freien Endbereich des Steuerlenkers (**7**) eine Haltevorrichtung (**11**) vorgesehen ist, die beim normalen Öffnen und Schließen der Frontklappe (**1**) am karosserieseitigen Gelenk (**12**) des kurzen Lenkers (**5**) festgelegt ist.

4. Anordnung nach einem der vorhergehenden Ansprüche, **dadurch gekennzeichnet, dass** sich die karosserieseitigen Anlenkpunkte (**10, 13**) auf einem Grundträger (**3**) befinden, der an der Karosserie angebracht ist.

5. Anordnung nach einem der vorhergehenden Ansprüche, **dadurch gekennzeichnet, dass** die energiespeichernde Einrichtung (**9**) eine mechanische Feder und / oder eine Gasfeder aufweist.

6. Anordnung nach einem der Ansprüche 1 bis 4, **dadurch gekennzeichnet, dass** die energiespeichernde Einrichtung (**9**) eine pyrotechnische Einrichtung ist.

## Claims

1. A bonnet arrangement on a motor vehicle comprising at least one hinge device disposed at the rear in the direction of travel around which the bonnet is pivotable during normal opening and closing, and in the event of a collision between the vehicle and a pedestrian the hinge raises the rear region of the bonnet via an energy accumulator, wherein the hinge device comprises a four-bar linkage with a short arm and a long arm,
**characterised in that** a coupling arm (6) is pivoted between the body and the link (12) between the body and the short arm (5) and a control arm (7) is pivoted between the body and the link (8) between the body and the long arm (4) and engages the energy accumulator (9).

2. An arrangement according to claim 1,
**characterised in that** the control arm (7) extends beyond the link (8) between the body and the long arm (4), wherein the energy accumulator (9) is pivoted to the said free end region of the control arm (7).

3. An arrangement according to claim 1 or claim 2,
**characterised in that** the control arm (7) extends beyond the link (10) on the body, and a retaining device (11) provided on the said free end region of the control arm (7) is fixed to the link (12) between the body and the short arm (5) during normal opening and closing of the bonnet (1).

4. An arrangement according to any of the preceding claims,
**characterised in that** the joints (10, 13) on the body lie on a common base member (3) attached to the body.

5. An arrangement according to any of the preceding claims,
**characterised in that** the energy accumulator (9) comprises a mechanical spring and/or a pneumatic spring.

6. An arrangement according to any of claims 1 to 4,
**characterised in that** the energy accumulator (9) is a pyrotechnic device.

## Revendications

1. Montage d'un capot de véhicule comportant au moins une installation de charnières située derrière dans la direction de circulation, autour de laquelle le capot pivote pour s'ouvrir et se fermer normalement, et qui, en cas de collision du véhicule avec un piéton, soulève la partie arrière du capot par une installation d'accumulation d'énergie,
l'installation de charnières ayant un quadrangle articulé avec une branche courte et une branche longue,
**caractérisé par**
un bras de couplage (6) entre la carrosserie et l'articulation (12) côté carrosserie de la branche courte (5), et
entre la carrosserie et l'articulation (8) côté carrosserie du bras long (4), est articulé un bras de commande (7) sur lequel agit l'installation d'accumulation d'énergie (9).

2. Montage selon la revendication 1,
**caractérisé en ce que**
le bras de commande (7) s'étend au-delà de l'articulation côté carrosserie (8) du bras long (4), et l'installation d'accumulation d'énergie (9) est articulée à cette zone d'extrémité libre du bras de commande (7).

3. Montage selon la revendication 1 ou 2,
**caractérisé en ce que**
le bras de commande (7) s'étend au-delà de l'articulation (10) à la carrosserie, et cette zone d'extrémité libre du bras de commande (7) comporte un dispositif de fixation (11) qui en cas d'ouverture et de fermeture normales du capot (1) est fixé à l'articulation côté carrosserie (12) du bras court (5).

4. Montage selon l'une des revendications précédentes,
**caractérisé en ce que**
les points d'articulation (10, 13) côté carrosserie, se trouvent sur un support de base (3) fixé à la carrosserie.

5. Montage selon l'une des revendications précédentes,
**caractérisé en ce que**
l'installation d'accumulation d'énergie (9) comporte un ressort mécanique et/ou un ressort à gaz.

6. Montage selon l'une des revendications 1 à 4,
**caractérisé en ce que**
l'installation d'accumulation d'énergie (9) est une installation pyrotechnique.
